# EUROPEAN PATENT APPLICATION

(11) **EP 4 657 681 A1**
(43) Date of publication of application: **03.12.2025**
(21) Application number: 25179864.1
(22) Date of filing: 30.05.2025
(51) Int. Cl.: H02G 1/14, H02G 15/007, H02G 15/064, H02G 15/184, H02G 15/20

(54) **CABLE ACCESSORY DEVICE FOR TERMINATING OR JOINTING A HIGH VOLTAGE CABLE**

(30) Priority: 31.05.2024 NO 20240560
(71) Applicant: Nexans, 92400 Courbevoie (FR)
(72) Inventor: Doedens, Espen, 1788 Halden (NO); Lallouet, Nicolas, 62360 Baincthun (FR); Frisk, Nils-Bertil, 45297 Strömstad (SE)
(74) Representative: Acapo Onsagers AS

(57) **Abstract**

A cable accessory device (2) comprises an outer body (6) having a first side (8), a second side (10), and an interior space (12); a stress controlling element (14), and an inner layer (28). At least the first side (8) is configured to feed an end of a high voltage cable (4) into the interior space (12). The stress controlling element (14) is configured to be arranged on the cable (4). The inner layer (28) is configured to be arranged around the cable (4) under tension. At least one pressure alleviating component (20) having a first end (24) and a second end (26) is configured to be placed around the cable (4) at the stress controlling element (14) or the inner layer (28) to exert a radially inwards directed force onto the cable (4), the force decreasing from the first end (24) to the second end (26).

## Description

### Field of the invention

The present invention relates to a cable accessory device for terminating or jointing a high voltage cable, to a method for terminating or jointing a high voltage cable.

### Background

High voltage (HV) cables for the transmission of electrical power usually comprise a conductor as a core element, which may be surrounded by an inner semiconductor, a subsequent insulating layer, an outer semiconducting layer and additional layers, such as a metallic screen and/or a polymer outer sheath. HV cable insulation, and in particular extruded HV cable insulation, can be sensitive to exertion of excessive pressure, in particular in combination with elevated temperature. Thermoplastic HV insulation, such as a polypropylene-based insulation, may also soften at elevated temperatures, which could be challenging especially in regions in which an installed cable meets a cable accessory.

Here, a radial pressure may be exerted onto a cable section, caused by an interior component or a pressurized gas or oil in a cable accessory device, such as a termination, a joint or the like. Going from a high radial pressure to a lower radial pressure, i.e. the ambient pressure, over a short distance could cause the insulation material of the cable to deform. This could be particularly pronounced for non-SF6 gas-filled terminations, where the pressure may be elevated up to 6-7 bars, leading to the creation of a high pressure gradient at a sealing element.

An object of the invention is to improve existing solutions, or at least propose an alternative cable accessory device or an alternative method for jointing or terminating a high voltage cable, with which a deformation of the cable can be reduced or prevented.

### Summary of the invention

The present invention is defined by the appended claims and in the following:
In a first aspect, the invention relates to a cable accessory device for terminating or jointing a high voltage cable. The device comprises an outer body having a first side, an opposite second side, and an interior space between the first side and the second side; a stress controlling element arrangeable inside the outer body; and at least one inner layer. At least the first side of the outer body is configured to feed an end of a high voltage cable into the interior space. The stress controlling element is configured to be arranged on the high voltage cable. The at least one inner layer is configured to be arranged around the high voltage cable under tension. According to the invention, at least one pressure alleviating component is provided, and configured to be placed around a part of the high voltage cable, wherein the pressure alleviating component has a first end and a second end and is configured to exert a radially inwards directed force onto the high voltage cable, the force decreasing from the first end to the second end, and wherein the first end of the pressure alleviating component is arranged at a side of the stress controlling element or of the inner layer that faces away from the second side of the outer body.

The term "cable accessory device" may refer to a cable termination device, a cable joint or any other device that can be connected to a high voltage cable end section. The "outer body" of a cable termination device may refer to an insulator housing, which could be a self-supporting component made from a rigid material. If the cable accessory device refers to a cable joint, the outer body may instead refer to an outer insulation layer, which could be made from a flexible material.

The inner layer may refer to an internal component of the accessory device, such as an insulating layer, a sealing element or any other component that is in contact with the high voltage cable and is at least partially enclosed by the outer body. The inner layer may be made from a flexible material. It may be arranged on the cable end section under a pre-tension and/or it may experience a radial pressure from a fluid inside the interior space. The inner layer may exert a mechanical pressure onto the cable end section.

The stress controlling element may, for example, have a conical shape at least in a section. The stress controlling element helps to prevent localized concentrations of electrical stress. Insulation failure at a termination of a shielded cable caused by a high electrical stress and a high potential gradient between a shield termination and a cable conductor is thus prevented. The stress controlling element may be provided in the form of one or several separate components that is/are attached to the high voltage cable during manufacturing of a cable termination or cable joint, depending on the purpose of the cable accessory device.

High voltage cable insulation, such as extruded high voltage cable insulation, can be sensitive to excessive mechanical pressure exertion, in particular in combination with elevated temperatures. Thermoplastic high voltage insulation, such as an insulation based on polypropylene, may soften at elevated temperatures. This may create a challenging condition onto the cable especially where the cable meets a cable accessory device, as there may be an axial cable section experiencing an increased mechanical pressure and an adjacent axial cable section showing a pronounced pressure gradient. The transition from a higher radial pressure to a lower radial pressure over a short distance may then cause the insulation material to deform.

For example, a pronounced pressure gradient could occur in an accessory device in the form of an outdoor or GIS termination having a fluid pressure of 3 to 10 bars that acts onto the insulation of the cable end section inside the termination. However, just outside the termination, the ambient pressure acts onto the cable insulation, leading to a pronounced pressure gradient. This may especially be the case for non-SF6 gas filled terminations where the pressure is to be elevated to 6 to 7 bars, which so far has been tested successfully for a 525kV cable with a conductor temperature of 80°C and an XLPE insulation. However, for thermoplastic insulation a resulting pressure gradient at a sealing gland of a termination could be an issue if no additional measures are taken.

According to the invention, at least one pressure alleviating component is provided and configured to be placed around a part of the high voltage cable. The pressure alleviating component is used for exerting a radially inwards-directed force, leading to a mechanical pressure at least onto a section of the cable directly adjacent to a region that would otherwise experience a pronounced pressure gradient as explained above. The radial pressure exerted by the pressure alleviating component has a gradient from a higher mechanical pressure to a lower mechanical pressure, in order to provide a smooth transition in mechanical pressure.

In this regard, the term "directly adjacent" as used herein for describing positions of two elements relative to each other, may be understood as the respective two elements being immediately next to each other without any intervening space or material. They are in direct contact or nearly so. Directly adjacent elements may physically touch or be extremely close with no other components in between. In contrast, the term "adjacent" does not exclude the presence or a gap or some form of non-interfering material in between.

As stated above, the pressure alleviating component has a first end and a second end. The first end refers to an end that is arranged adjacent to the region where a pressure jump would otherwise occur. The pressure alleviating component may overlap the respective inner layer in an axial direction, i.e. along the extension of the cable. However, it may also be arranged axially separate therefrom. The pressure alleviating component may preferably be configured to substantially symmetrically exert radial inwards-directed forces onto the high voltage cable. The design of the pressure alleviating component determines the axial gradient of the mechanical pressure exerted onto the cable section.

As a result, regions with pronounced pressure steps are influenced in such a way that harmonic pressure gradients on the cable end section are caused, which avoid deformations induced by pressure jumps.

The at least one inner layer may comprise a sealing element, wherein the sealing element may be configured to seal the first side of the outer body to the high voltage cable when the high voltage cable is fed into the outer body, thereby allowing to hold a fluid in the interior space of the outer body. The cable accessory device may thus be a high voltage cable termination device, such as a fluid-filled termination. The outer body may be provided in the form of an insulator housing, which provides the inner chamber. To keep the fluid inside the inner chamber, the sealing element is arranged on the cable at the first side of the outer body, where a first opening to feed the cable into the inner chamber may be provided. The sealing element covers the first opening. The sealing element may be made from an elastic, rubber-like element. It may be arranged on the cable section under a certain tension to provide a reliable contact along the circumference of the cable section. If the fluid in the inner chamber is pressurized, the pressurized fluid may exert an additional mechanical pressure onto a rim section of the sealing element. To avoid a distinct pressure step, a pressure alleviating component may be arranged outside of the inner chamber directly adjacent to the sealing element.

The pressure alleviating component may have a conical shape, wherein a first diameter of the pressure alleviating component at the first end may exceed a second diameter of the pressure alleviating component at the second end. In particular when the pressure alleviating component is arranged under tension on the cable section, a larger diameter could be associated with a higher material strength, i.e. a local thickness of the material, and thus a higher mechanical pressure at the first end than at the second end. Thus, by providing the conical shape, a pressure gradient from the first end to the second end may be achieved. The pressure alleviating component may have a conical outer shape and a cylindrical hole at the inside for leading-through the high voltage cable. The space between the cylindrical hole and the conical contour may be completely or substantially, e.g. for at least 90%, filled by the material of the pressure alleviating component.

The pressure alleviating component may comprise a self-amalgamating tape made from an elastic material. Such a self-amalgamating tape may be non-adhesive, but cohesive to stick on itself. A self-amalgamating tape is a certain insulating material composed of a non-adhesive elastomeric compound that, upon application in overlapping layers, fuses to itself without the need for external adhesives, forming a seamless and waterproof protective layer usable for electrical insulation, sealing, and corrosion protection. By winding the tape around the cable in a targeted arrangement of layers, the pressure alleviating component can be formed with substantially unlimited geometries and thickness variations. Overlapping tape windings bond to each other. The self-amalgamating tape may be stretched or tensioned when winding it around the cable to generate a radial inwards-directed mechanical pressure. The elastic material, from which the self-amalgamating tape is made, may be an elastomeric compound such as ethylene propylene rubber (EPR), silicone rubber or any other material that has the same electrical insulation properties, flexibility, resistance to environmental factors and the ability to bond to themselves without adhesive.

The pressure alleviating component may comprise a sleeve made from an elastic material. The sleeve may constitute an insulation layer, a sealing element or another component arranged inside the accessory device. It may be attached to the cable by pulling it with an opening onto the cable. Depending on its purpose, the geometry, size and material can be selected. The sleeve may be made from a rubber-like material.

The radially inwards directed force onto the high voltage cable may substantially linearly decrease from the first end to the second end. Thus, the pressure gradient is linear, and the mechanical pressure distribution along the respective cable section is smooth. However, the pressure gradient could also differ from a linear behavior and may simply decrease from the first end to the second end continuously. If certain pressure gradients are desired, these can be achieved by a certain geometry of the pressure alleviating component.

One of the at least one pressure alleviating component may be configured to be placed on the high voltage cable at the sealing element directly adjacent to the first opening outside of the interior space, wherein the radially inwards directed force at the first end of the respective pressure alleviating component may substantially equal a radially inwards directed force onto the high voltage cable exerted by the sealing element at a part of the high voltage cable adjacent to the first end of the respective pressure alleviating component. The maximum inwards-directed force of the respective pressure alleviating component may thus be exerted directly at the sealing element and from there the radial forces of the respective pressure alleviating component decreases towards the second end. In the transition from the sealing element to the respective pressure alleviating component a pressure step does not occur.

The sealing element and the respective pressure alleviating component may be formed as a sealing section and a pressure alleviating section of a one-piece component. The sealing and pressure alleviation may thus be two functions integrated into a single part, which simplifies manufacturing and assembly.

In a second aspect, the invention is directed to a method for terminating or jointing a high voltage cable, the method comprising the steps of:
- providing an outer body having a first side, an opposite second side, and an interior space,
- arranging a stress controlling element on an end section of the high voltage cable,
- providing at least one inner layer, and
- arranging the cable end section with the stress controlling element in the interior space of the outer body housing, such that it extends through a first opening of the outer body arranged at the first side.

According to the invention, the method comprises the step of:
- placing at least one pressure alleviating component, having a first end and a second end, around a part of the end section at a side of the stress controlling element or of the inner layer that faces away from the second side of the outer body, such that the at least one pressure alleviating component exerts a radially inwards directed force onto the high voltage cable, the force decreasing from the first end to the second end.

The at least one inner layer may comprise a sealing element, wherein the sealing element is configured to seal the first side of the outer body to the high voltage cable when the high voltage cable is fed into the outer body, thereby allowing to hold a fluid in the interior space of the outer body.

Placing the at least one pressure alleviating component may comprise winding a self-amalgamating tape onto the cable end section under a pretension, wherein the pretension determines the radially inwards directed force.

The winding may comprise forming a plurality of layers to create a conical shape.

One of the at least one pressure alleviating component may be placed onto the cable end section at the sealing element directly adjacent to the first opening outside of the interior space.

One of the at least one pressure alleviating component may be placed onto the cable end section directly at the stress controlling element in the interior space.

According to a third aspect, the invention is directed to an assembly, comprising a high voltage cable and a cable accessory device according to the above.

The cable may comprise an insulation made of a polyolefine-based material.

### Short description of the drawings

In the following description this invention will be further explained by way of exemplary embodiments shown in the drawings:
Fig. 1 shows a cross-sectional view of a cable accessory device in the form of a termination and having a pressure alleviating component at a stress controlling element.
Fig. 2 shows a cross-sectional view of a cable accessory device in the form of a termination and having a pressure alleviating component at a sealing element.
Fig. 3 shows a sectional view of the right side of a sealing device having a sealing section and a pressure alleviating section.
Fig. 4 shows a schematic view of creating a pressure alleviating component on a cable by a self-amalgamating tape.
Fig. 5 shows a schematic, block-oriented view of a method for terminating or jointing a high voltage cable.

### Detailed description of the invention

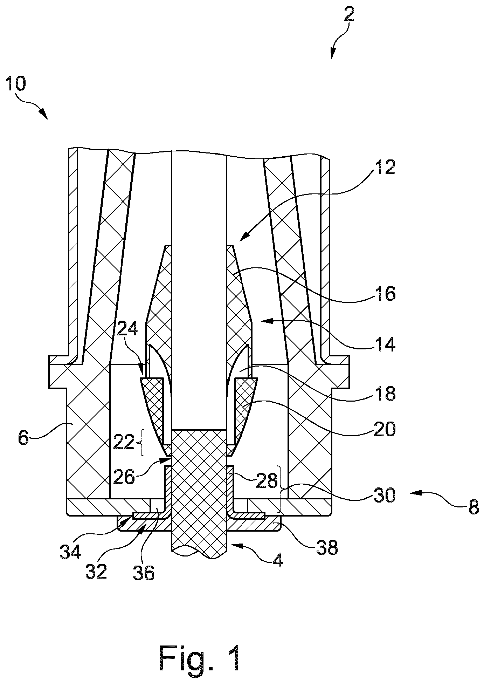

Fig. 1 shows a cable accessory device 2 in the form of a fluid-filled termination device for terminating a high voltage cable 4. The cable accessory device 2 comprises an outer body 6 having a first side 8, an opposite second side 10, and a hollow interior space 12 between the first side 8 and the second side 10. In this exemplary embodiment, the interior space 12 is filled with a fluid, such as an oil or a gas. If a gas is used, the gas may be pressurized.

An end of the cable 4 is inserted into the interior space 12. A stress controlling element 14, which exemplarily comprises a cone 16 made from an insulating material and a conductive stress cone 18, is arranged on the cable 4 inside the interior space 12. The stress controlling element 14 helps to prevent localized concentrations of electrical stress.

The stress controlling element 14 exerts a mechanical pressure onto the cable 4 in a radial inwards direction. Directly adjacent to the stress controlling element 14, a different mechanical pressure would act onto the cable 4, depending on the pressure inside the interior space 12. The cable 4 may comprise a polyolefine-based insulation layer, which could experience a local deformation affecting the electrical properties upon a local pressure peak. To prevent such a deformation, a transition region 22 from the stress controlling element 14 to an adjacent part of the cable 4 facing the first side 8 comprises a first pressure alleviation component 20.

The first pressure alleviating component 20 axially extends along the whole transition region 22 and thus encloses a part of the stress controlling element 14 and an adjacent axial part of the cable 4. The first pressure alleviating component 20 has a first end 24 and a second end 26 and is configured to exert a radially inwards directed force onto the high voltage cable 4. This could, for example, be achieved by a radial pre-tension of the first pressure alleviating component 20. Due to a substantial conical outer contour of the first pressure alleviating component 20, the material thickness of the first pressure alleviating component 20 decreases from the first end 24 to the second end 26. Thus, the radially inwards-directed mechanical pressure decreases from the first end 24 to the second end 26. The total mechanical pressure onto the cable 4 in the transition region 22 thus continuously decreases towards the first side 8 of the outer body 6. The cable 4 thus does not experience local deformations caused by the stress controlling element 14 that may affect the electrical properties of the cable insulation.

In the exemplary embodiment of Fig. 1, the interior space 12 is sealed at the first side 8 of the outer body 6 with a sealing element 28. The sealing element 28 has a collar region 30 arranged inside the interior space 12. The pressure inside the interior space 12 acts onto the sealing element 28. Consequently, the collar region 30 exerts a radially inwards-directed pressure onto the cable 4. The sealing element 28 has an outer flange 32, which is pressed onto an outer surface 34 of the outer body 6 surrounding a first opening 36 through a bottom plate 38. Resultantly, the pressure inside the interior space 12 can be maintained.

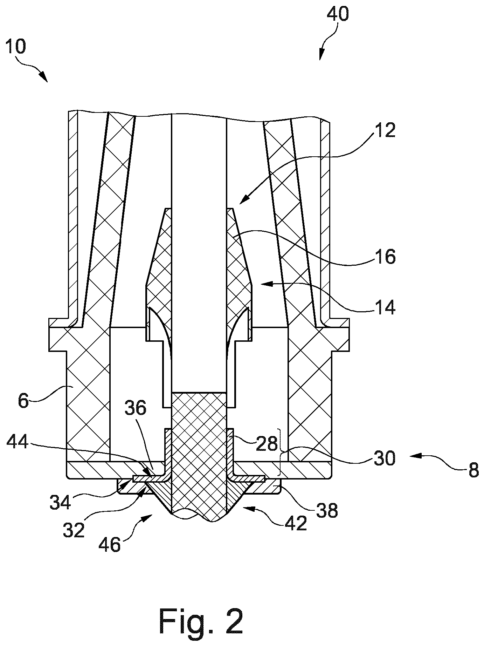

Fig. 2 shows another exemplary embodiment of a cable accessory device 40 in the form of a fluid-filled termination device. It is similar to the device 2 shown in Fig. 1 in the main components. In this example, a second pressure alleviating component 42 is arranged at the sealing element 28 at a side that faces away from the second side 10 of the outer body 6. The second pressure alleviating component 42 has a substantially conical outer shape and has a first end 44 and a second end 46, wherein the second pressure alleviating component 42 exerts a radially inwards directed force onto the high voltage cable 4, the force decreasing from the first end 44 to the second end 46. Consequently, the cable 4 does not experience local deformations caused by the sealing element 28 that may affect the electrical properties of the cable insulation.

Both pressure alleviating components 20 and 42 can be combined in a single cable accessory device.

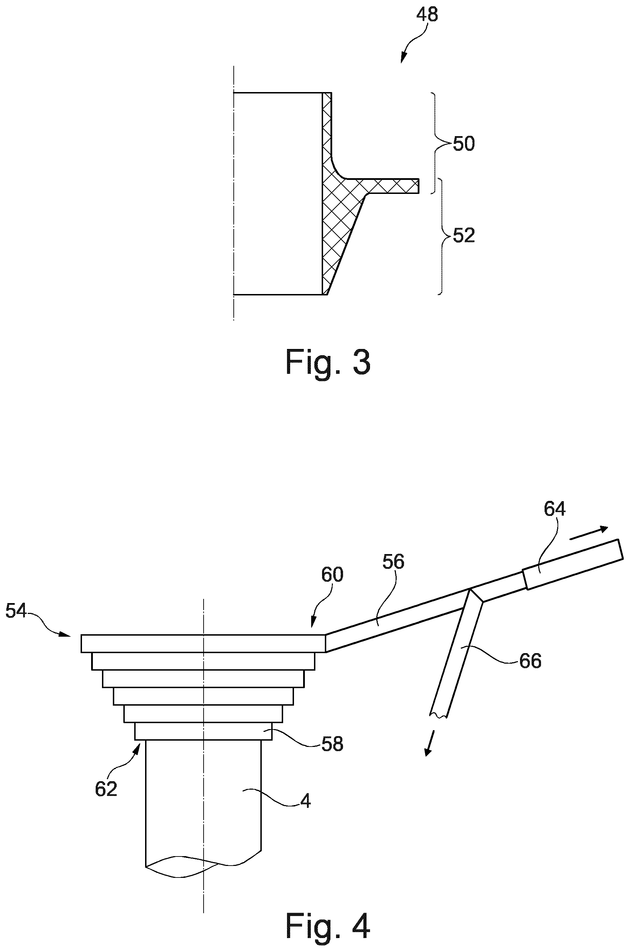

Fig. 3 shows a right half of a sealing device 48 in a sectional view. The sealing device 48 is a combination of the sealing element 28 and the second pressure alleviating component 42 in the form of a one-piece component. The sealing device 48 comprises a sealing section 50, which functions as the sealing element 28, and a pressure alleviating section 52, which functions as the second pressure alleviating component 42.

Fig. 4 schematically shows the creating of a pressure alleviating component 54 on a high voltage cable 4 by using a self-amalgamating tape 56. The tape 56 is wound around the cable 4 in several consecutive layers 58, which partially overlap. The diameter of the pressure alleviating component 54 decreases from a first end 60 to a second end 62, which is achieved by continuously reducing the number of windings arranged on top of each other from the first end 60 to the second end 62. By applying a tension force onto the tape 56 when winding it onto the cable 4, a pre-tension can be generated, leading to a radially inwards-directed force onto the cable, which decreases from the first end 60 to the second end 62.

When winding the tape 56, a protective layer 66 may need to be peeled off the tape 56, which prevents that the tape 56 sticks to itself when stored on a spool 64.

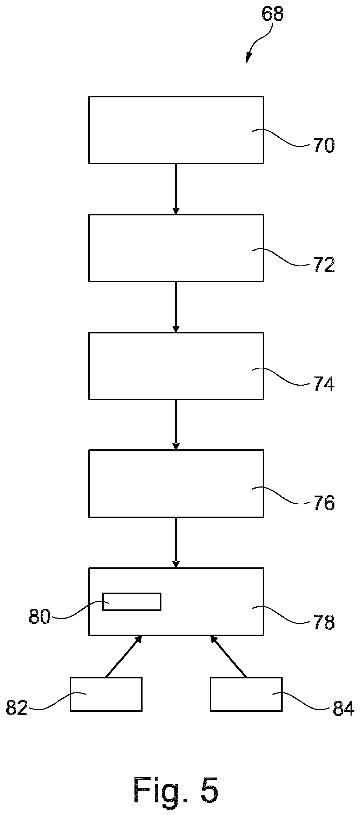

Fig. 5 shows a method 68 for terminating or jointing a high voltage cable 4 in a schematic, block-oriented view. The method 68 exemplarily comprises the steps of providing 70 an outer body 6 having a first side 8, an opposite second side 10, and an interior space 12, arranging 72 a stress controlling element 14 on an end section of the high voltage cable 4, providing 74 at least one inner layer 28, and arranging 76 the cable end section with the stress controlling element 14 in the interior space 12 of the outer body 6, such that it extends through a first opening 36 of the outer body 6 arranged at the first side 8. According to the invention, the method 68 comprises providing 78 at least one pressure alleviating component 20, 42 or 54, having a first end 24, 44 or 60 and a second end 26, 46 or 62, around a part of the end section at a side of the stress controlling element 14 or of the inner layer 26 that faces away from the second side 10 of the outer body 6, such that the at least one pressure alleviating component 20, 42 or 54 exerts a radially inwards directed force onto the high voltage cable 4. Thereby, the force decreases from the first end 24, 44 or 60 to the second end 26, 46 or 62.

As shown in the previous figures, the at least one inner layer 28 may comprise a sealing element 28, which is configured to seal the first side 8 of the outer body 6 to the high voltage cable 4 when the high voltage cable 4 is fed into the outer body 6, thereby allowing to hold a fluid in the interior space 12 of the outer body 6.

As shown in Fig. 4, placing 78 the at least one pressure alleviating component 20, 42 or 54 may comprise winding 80 a self-amalgamating tape 56 onto the cable end section under a pretension, wherein the pretension determines the radially inwards directed force. The winding 80 comprises forming a plurality of layers 58 to create a conical shape.

In an example, a first pressure alleviating component 20 is placed 82 onto the cable end section directly at the stress controlling element 14 in the interior space 12.

In another example, a second pressure alleviating component 42 is placed 84 onto the cable end section at the sealing element 28 directly adjacent to the first opening 36 outside of the interior space 12.

### Reference numerals

- 2: cable accessory device
- 4: high voltage cable
- 6: outer body
- 8: first side
- 10: second side
- 12: interior space
- 14: stress controlling element
- 16: cone
- 18: stress cone
- 20: first pressure alleviating component
- 22: transition region
- 24: first end
- 26: second end
- 28: sealing element
- 30: collar region
- 32: flange
- 34: outer surface
- 36: first opening
- 38: bottom plate
- 40: cable accessory device
- 42: second pressure alleviating component
- 44: first end
- 46: second end
- 48: sealing device
- 50: sealing section
- 52: pressure alleviating section
- 54: pressure alleviating component
- 56: self-amalgamating tape
- 58: layer
- 60: first end
- 62: second end
- 64: spool
- 66: protective layer
- 68: method
- 70: providing outer body
- 72: arranging stress controlling element
- 74: providing inner layer
- 76: arranging cable end section
- 78: providing pressure alleviating component
- 80: winding
- 82: placing onto cable end section at stress controlling element
- 84: placing onto cable end section at sealing element

## Claims

1. A cable accessory device (2, 40) for terminating or jointing a high voltage cable (4), the device comprising:
an outer body (6) having a first side (8), an opposite second side (10), and an interior space (12) between the first side (8) and the second side (10),
a stress controlling element (14) arrangeable inside the outer body (12), and
at least one inner layer (28, 50),
wherein at least the first side (8) of the outer body (12) is configured to feed an end of a high voltage cable (4) into the interior space (12),
wherein the stress controlling element (14) is configured to be arranged on the high voltage cable (4), and
wherein the at least one inner layer (28, 50) is configured to be arranged around the high voltage cable (4) under tension,
wherein the cable accessory device (2, 40) comprises at least one pressure alleviating component (20, 42, 54) configured to be placed around a part of the high voltage cable (4),
wherein the pressure alleviating component (20, 42, 54) has a first end (24, 44, 60) and a second end and (26, 46, 62) is configured to exert a radially inwards directed force onto the high voltage cable (4), the force decreasing from the first end (24, 44, 60) to the second end (26, 46, 62), and
wherein the first end (24, 44, 60) of the pressure alleviating component (20, 42, 54) is arranged at a side of the stress controlling element (14) or of the inner layer (28, 50) that faces away from the second side (10) of the outer body (6).

2. The cable accessory device (2, 40) according to claim 1,
wherein the at least one inner layer (28, 50) comprises a sealing element (28, 50),
wherein the sealing element (28, 50) is configured to seal the first side (8) of the outer body (6) to the high voltage cable (4) when the high voltage cable (4) is fed into the outer body (6), thereby allowing to hold a fluid in the interior space (12) of the outer body (6).

3. The cable accessory device (2, 40) according to claim 1 or 2,
wherein the pressure alleviating component (20, 42, 54) has a conical shape, and
wherein a first diameter of the pressure alleviating component (20, 42, 54) at the first end (24, 44, 60) exceeds a second diameter of the pressure alleviating component (20, 42, 54) at the second end (26, 46, 62).

4. The cable accessory device (2, 40) according to any of the preceding claims,
wherein the pressure alleviating component (20, 42, 54) comprises a self-amalgamating tape (56) made from an elastic material.

5. The cable accessory device (2, 40) according to any of the preceding claims,
wherein the pressure alleviating component (20, 42, 54) comprises a sleeve made from an elastic material.

6. The cable accessory device (2, 40) according to claim 2,
wherein one of the at least one pressure alleviating component (20, 42, 54) is configured to be placed on the high voltage cable (4) at the sealing element (28, 50) directly adjacent to the first opening (36) outside of the interior space (12), and
wherein the radially inwards directed force at the first end (24, 44, 60) of the respective pressure alleviating component (20, 42, 54) substantially equals a radially inwards directed force onto the high voltage cable (4) exerted by the sealing element (28, 50) at a part of the high voltage cable (4) adjacent to the first end (24, 44, 60) of the respective pressure alleviating component (20, 42, 54).

7. The cable accessory device (2, 40) according to claim 2 or 6,
wherein the sealing element (28, 50) and the respective pressure alleviating component (20, 42, 54) are formed as a sealing section (50) and a pressure alleviating section (52) of a one-piece component.

8. A method (68) for terminating or jointing a high voltage cable (4), the method comprising the steps of:
providing (70) an outer body (6) having a first side (8), an opposite second side (10), and an interior space (12),
arranging (72) a stress controlling element (14) on an end section of the high voltage cable (4),
providing (74) at least one inner layer (28, 50), and
arranging (76) the end section of the cable (4) with the stress controlling element (14) in the interior space (12) of the outer body (6), such that it extends through a first opening (36) of the outer body (6) arranged at the first side (8),
wherein the method (68) comprises the step of:
placing (78) at least one pressure alleviating component (20, 42, 54), having a first end (24, 44, 60) and a second end (26, 46, 62), around a part of the end section at a side of the stress controlling element (14) or of the inner layer (28, 50) that faces away from the second side (10) of the outer body (6), such that the at least one pressure alleviating component (20, 42, 54) exerts a radially inwards directed force onto the high voltage cable (4), the force decreasing from the first end (24, 44, 60) to the second end (26, 46, 62).

9. The method (68) according to claim 8,
wherein the at least one inner layer (28, 50) comprises a sealing element (28, 50),
wherein the sealing element (28, 50) is configured to seal the first side (8) of the outer body (6) to the high voltage cable (4) when the high voltage cable (4) is fed into the outer body (6), thereby allowing to hold a fluid in the interior space (12) of the outer body (6).

10. The method (68) according to claim 8 or 9,
wherein placing (78) the at least one pressure alleviating component (20, 42, 54) comprises winding (80) a self-amalgamating tape (56) onto the end section of the cable (4) under a pretension, and
wherein the pretension determines the radially inwards directed force.

11. The method (68) according to claim 10,
wherein the winding(80) comprises forming a plurality of layers (58) to create a conical shape.

12. The method (68) according to claim 9 or 10 to 11, when dependent on claim 9,
wherein one of the at least one pressure alleviating component (20, 42, 54) is placed onto the end section of the cable (4) at the sealing element (28, 50) directly adjacent to the first opening (36) outside of the interior space (12).

13. The method (68) according to any of the claims 8 to 12,
wherein one of the at least one pressure alleviating component (20, 42, 54) is placed onto the end section of the cable (4) directly at the stress controlling element (14) in the interior space (12).

14. An assembly, comprising a high voltage cable (4) and a cable accessory device (2, 40) according to any of the claims 1 to 7.

15. The assembly according to claim 14, wherein the cable (4) comprises an insulation made of a polyolefine-based material.
